# EUROPEAN PATENT APPLICATION

(11) **EP 3 263 373 A1**
(43) Date of publication of application: **03.01.2018**
(21) Application number: 17175224.9
(22) Date of filing: 09.06.2017
(51) Int. Cl.: B60G 17/015, B60G 17/019, B60G 11/27

(54) **A TIRE PROTECTION SYSTEM**

(30) Priority: 27.06.2016 TR 201608940
(71) Applicant: Tirsan Treyler Sanayi Ve Ticaret Anonim Sirketi, 54580 Sakarya (TR)
(72) Inventor: YIGIT, Ferhat, SAKARYA (TR)
(74) Representative: Yamankaradeniz, Kemal

(57) **Abstract**

The invention incorporates directional control valve (1), airbag (2), tire (3), sensor (4), electronic control unit (5), indicator light (6) and suspension system control unit (7), and it is related to air suspension systems of big vehicles called trailers that are used for the transportation of heavy loads.

## Description

### Technical Area

The invention is about air suspension systems of large vehicles called trailers that are used for transportation of heavy loads.

### Known State of the Technique

Trailer is a road transportation vehicle for cargo transportation. It is towed by a motor vehicle, designed and manufactured depending on the properties of the load, contains at least one axle and is attached to the towing vehicle with at least one attachment device such as draw bar, turntable and hook.

In current practices, the connection between a trailer chassis and wheels is achieved with axles. An axle is a metal rod passing through and fixed to the center of the wheels and placed in latitudinal manner under the vehicle.

In case any tire of a trailer bursts, the tire in question must be changed regardless of the conditions. However, multiple tires may have blown at the same time or the conditions may be challenging for changing of tires and the tires may not be changed. In such a case, the relevant wheel gets damaged due to surplus load it bears and usually, the damage reaches to a level which makes repair of the wheel impossible.

As a result, it was necessary to make improvements in the technical area due to the issues stated above and due to insufficiency of the current solutions on the issue.

### Purpose of the Invention

The invention was designed by being inspired from the current states and aims to eliminate the issues mentioned above.

Airbags are used in air suspension systems. At the axle of each wheel, there is an airbag instead of a spring. Airbag consists of a rubber bellow inflated with air inside a protective cover.

The main purpose of the invention is to ensure that the distance between the chassis and the axle is kept equal at every position thanks to level adjustment valves. The control lever of the level adjustment valve is connected with the airbags of the axles.

In the event that the vehicle load is excessive, the chassis tends to sit on top of the airbags and gets close to the axles. As airbags are compressed, the command lever affects the level adjustment valve and increases the pressure of the air within the airbags. The airbags inflate until they reach the position set between the chassis and the axle. If the vehicle load decreases, the airbags are released and try to increase the distance between the axle and the chassis. In this case, the control lever pushes the level adjustment valve towards the opposite direction and decreases air pressure of the airbags as required. The deflated airbags ensure that the distance set between the chassis and the axle remains constant.

Depending on intended use, axle lifting is a feature used to break the contact of the wheels connected to the axle(s) of the vehicles with the ground or to cease load transfer to the wheels.

Another purpose of the invention is to lighten the load bearing on the wheels of an axle with deflated tires. The tire deflation detection system installed on the vehicle relieves the load on the relevant axle by decreasing the pressure on the airbags of the relevant axle.

In order to achieve the aforementioned purposes, the invention is a system to protect the tires used for large vehicles called trailers that are used for transportation of heavy loads, and the said system incorporates;
- at least one sensor that constantly and actively checks the pressure of the said tires, detects deflation and communicates the status information of the tires to an electronic control unit,
- the above mentioned electronic control unit that controls the suspension system control unit depending on the tire status information received from the said sensor,
- the said suspension system control unit that controls the vehicle's height level through adjustment of pressure of at least one airbag,
- at least one directional control valve of the relevant axle, which discharges the air in the right and left airbags controlled by the said suspension system control unit in case the said electronic control unit detects any tire punctures,
- the said airbag that inflates and lessens the load on the relevant tire,
- at least one indicator lamp that warns the driver upon engagement and disengagement of the system.

The structural and characteristic features and all advantages of the invention would be understood more clearly with the figures presented below and the detailed descriptions provided in reference to the figures, therefore, the assessment should be conducted by taking these figures and the detailed descriptions into account.

### Figures that Help Understand the Invention

**Figure 1** is a two dimensional view of the preferred structure of the tire protection system that is the subject of the invention.

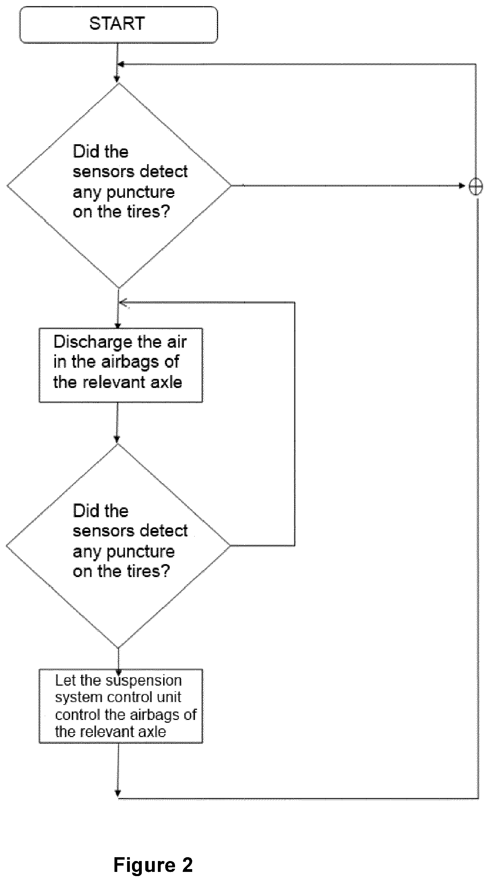

**Figure 2** is a flow diagram of tire protection system that is the subject of the invention.

### Description of Part References

1. Directional control valve
2. Airbag
3. Tire
4. Sensor
5. Electronic control unit
6. Indicator lamp
7. Suspension system control unit

The drawings are not necessarily scaled properly and details which are not required to understand this invention may be ignored. In addition, components that are identical to a great extent or elements that have identical functions to a great extent have been represented with the same number.

### Detailed Description of the Invention

In this detailed description, the preferred structures of the tire (3) protection system which is the subject matter of the invention are only described for the purposes of better clarification of the subject.

The tire protection system basically consists of directional control valve (1), airbag (2), tire (3), sensor (4), electronic control unit (5), indicator lamp (6) and suspension control unit (7).

Directional control valve (1) is the control component that is used to transmit the compressed air supplied from the suspension system and control the compressed air in the airbags (2).

Airbags (2) are used in the air suspension systems. In each tire, there are airbags (2) instead of springs. Airbags (2) consist of a rubber bellow inflated with air inside a protective cover.

Sensor (4) is a pressure sensor or ABS sensor that detects the pressure of tires (3).

Suspension system control unit (7) is the circuit that controls the height level of the vehicle through the pressure inside the airbags (2).

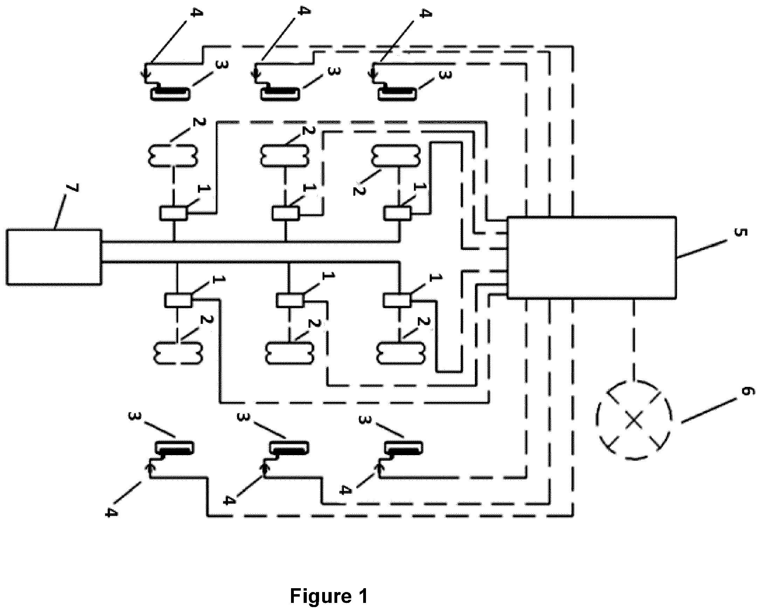

On the Flow diagram 1 above, the flow diagram of the tire protection system is presented. As it can be seen in Figure 1, the sensors (4) located on tires (3) constantly and actively check the pressure of tires (3), monitor punctures and communicate the status information of tires (3) to electronic control unit (5). Electronic control unit (5) discharges the air in right and left airbags (2) and decreases the load bearing on relevant tire (3) through the directional control valve (1) of the relevant axle for the airbags controlled by the suspension control unit (7) in case any puncture is detected on a tire (3) of any axle.

The indicator lamp (6) gives a warning to the driver immediately upon the engagement of the tire (3) protection system, and thus informs the driver.

On a vehicle with a flat tire, when the electronic control unit (5) detects that the tire puncture on any axle is eliminated, it instructs the suspension system control unit to recheck the right and left airbags (2) via the directional control valve of the relevant axle, and the load on the tire (3) is returned to normal state.

The indicator lamp (6) fades away as soon as the tire (3) protection system disengages, and thus informs the driver.

Thanks to the aforementioned elements, the damage which may occur on the tires (3) is mitigated. Tire (3) protection system can be used on vehicles with multiple axles and can be used with, at most, one less axle than the total number of axles as long as the capacity of axles is sufficient.

## Claims

1. The invention is a tire (3) protection system that is used in large vehicles called trailers for the transportation of heavy loads and it consists of;
- at least one sensor (4) that checks the pressure of the said tires (3) on which it is located and communicates the pressure information of tires (3) to an electronic control unit (5),
- an electronic control unit (5) that receives information about pressure of the said tires (3) from the said sensor (4) and determines if the tires (3) are punctured,
- the said suspension system control unit (7) that controls the height level of the said vehicles through adjustment of pressure of at least one airbag (2),
- at least one directional control valve (1) of the relevant axle, which discharges the air in the right and left airbags (2) controlled by the said suspension system control unit (7) in case the said electronic control unit (5) detects tire (3) punctures on an axle,
- the said airbag (2) which is charged with air and lessens the load on the relevant tire (3),
- at least one indicator lamp (6) that warns the driver upon engagement and disengagement of the system.

2. The system is consistent with the Claim 1 and the said sensor (4) is a pressure sensor and/or an ABS sensor.
